(19) Europäisches Patentamt
European Patent Office
Office européen des brevets

(11) **EP 2 437 079 A1**

(12) **EUROPEAN PATENT APPLICATION**
published in accordance with Art. 153(4) EPC

(43) Date of publication:
**04.04.2012 Bulletin 2012/14**

(51) Int Cl.:
*G01S 13/34* (2006.01)     *G01S 7/02* (2006.01)
*G01S 13/44* (2006.01)     *G01S 13/66* (2006.01)

(21) Application number: **10780347.0**

(22) Date of filing: **19.03.2010**

(86) International application number:
**PCT/JP2010/054840**

(87) International publication number:
**WO 2010/137390 (02.12.2010 Gazette 2010/48)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.05.2009  JP 2009125119**
**29.01.2010  JP 2010018549**

(71) Applicant: **Kabushiki Kaisha Toshiba**
**Minato-ku**
**Tokyo 105-8001 (JP)**

(72) Inventors:
• **TAKEYA, Shinichi**
**Tokyo 105-8001 (JP)**
• **KAWABATA, Kazuaki**
**Tokyo 105-8001 (JP)**
• **OOSUGA, Kazuki**
**Tokyo 105-8001 (JP)**
• **YOSHIDA, Takuji**
**Tokyo 105-8001 (JP)**
• **YOSHIDA, Tomohiro**
**Tokyo 105-8001 (JP)**
• **NIWA, Masato**
**Tokyo 105-8001 (JP)**
• **GOTO, Hideto**
**Tokyo 105-8001 (JP)**

(74) Representative: **HOFFMANN EITLE**
**Patent- und Rechtsanwälte**
**Arabellastraße 4**
**81925 München (DE)**

(54) **RADAR SYSTEM**

(57)     The present invention includes a transmitter/receiver 20 that transmits/receives an FMCW based sweep signal, a velocity grouping unit 36 that performs grouping of a target for each velocity range by a velocity of the target calculated based on the sweep signal from the transmitter/receiver, and a correlation tracking unit 37 that performs correlation tracking for each velocity group which is grouped by the velocity grouping unit.

FIG. 5

**Description**

[Field of the Invention]

The present invention relates to a radar apparatus that observes a velocity of a vehicle by using an FMCW (Frequency Modulated Continuous Wave) system, and particularly to a technology for performing correlation tracking.

[Background Art]

As a simple radar system for observing vehicles traveling on a road, an FMCW system is known (for example, refer to Non-patent Document 1). When vehicles are observed by a radar apparatus of the FMCW system, a target vehicle is detected and correlation tracking thereof is performed in an environment where many complex reflection points such as other vehicles or backgrounds are present. In such an environment, if the antenna beamwidth is wide and the resolution of the beat frequency axis in accordance with the FMCW system is low, multiple reflection points are present in each main lobe of both of the angle axis and the frequency axis, and thus reception is disturbed due to vector composition with respect to amplitude and phase. Thus, a problem occurs in that the target cannot be detected, or the positional accuracy of the target is low even if the target is detected, and a stable positional detection cannot be performed even by correlation tracking.

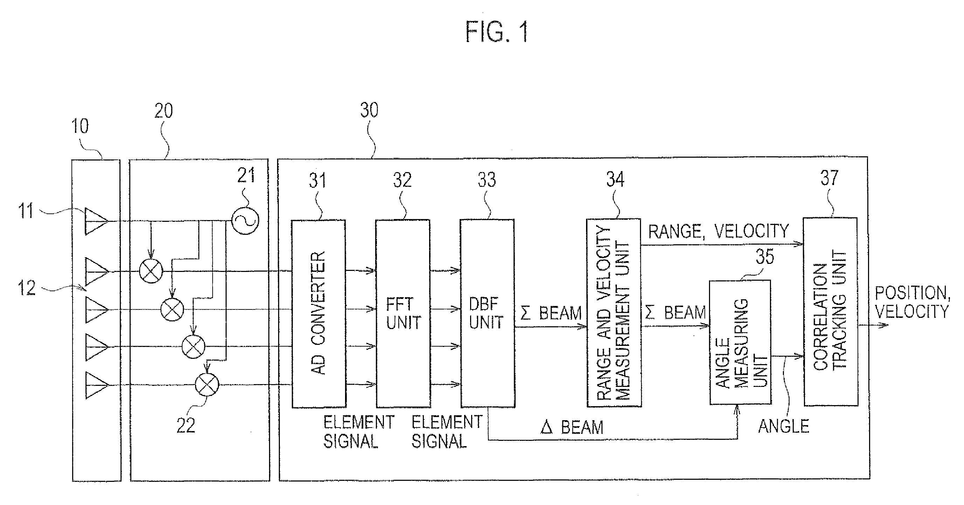

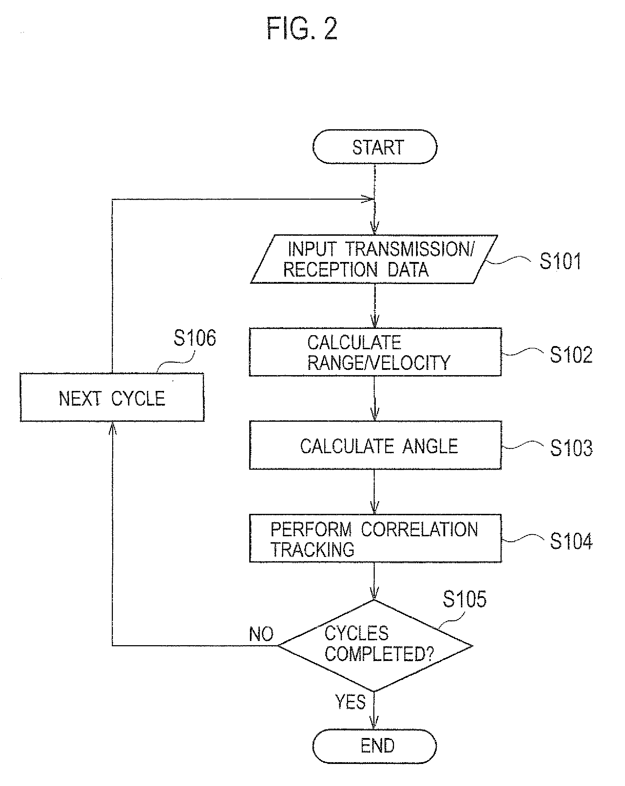

FIG. 1 is a system diagram showing a configuration of a conventional radar apparatus, and FIG. 2 is a flowchart showing operations of the radar apparatus. This radar apparatus includes an antenna 10, a transmitter/receiver 20, and a signal processor 30. In the following, operations of the radar apparatus are described focusing on the tracking processing. In the radar apparatus, transmission/reception data is first inputted (step S101). That is, a signal swept by a transmitter 21 inside the transmitter/receiver 20 is converted into a radio wave by an antenna transmission element 11, and is transmitted. Signals received by multiple antenna reception elements 12 in response to the transmission each undergo frequency conversion by multiple mixers 22, and then are sent to the signal processor 30. In the signal processor 30, a signal from the transmitter/receiver 20 is converted into a digital signal by an AD converter 31, and then is sent to an FFT (Fast Fourier Transform) unit 32 as an element signal.

The FFT unit 32 converts an element signal sent from the AD converter 31 into a signal on the frequency axis by the Fast Fourier Transform, and forwards the signal to a DBF (Digital Beam Forming) unit 33. The DBF unit 33 forms a $\Sigma$ beam and a $\Delta$ beam by using the signals of the frequency axis sent from the FFT unit 32. The E beam formed in the DBF unit 33 is sent to a range and velocity measuring unit 34, and the $\Delta$ beam formed in the DBF unit 33 is sent to an angle measuring unit 35.

A range and a velocity are then calculated (step S102). That is, the range and velocity measuring unit 34 calculates a range and a velocity using the $\Sigma$ beam from the DBF unit 33, and sends the range and velocity to a correlation tracking unit 37. An angle is then calculated (step S103). That is, the angle measuring unit 35 calculates an angle by using the $\Sigma$ beam sent from the DBF unit 33 through the range and velocity measuring unit 34, and $\Delta$ beam sent from the DBF unit 33, and then sends the obtained angle to the correlation tracking unit 37. Correlation tracking is then performed (step S 104).

That is, the correlation tracking unit 37 performs correlation processing to calculate the range and velocity of the target, and outputs the range and velocity to the outside. Subsequently, it is checked whether the entire cycles are completed or not (step S105). If it is determined that the entire cycles are not completed in step S105, processing for setting the next cycle as the target to be processed is performed (step S106). Subsequently, the process returns to step S101 and the above-described processing is repeated. On the other hand, if it is determined that the entire cycles are completed in step S105, the tracking processing of the radar apparatus is terminated.

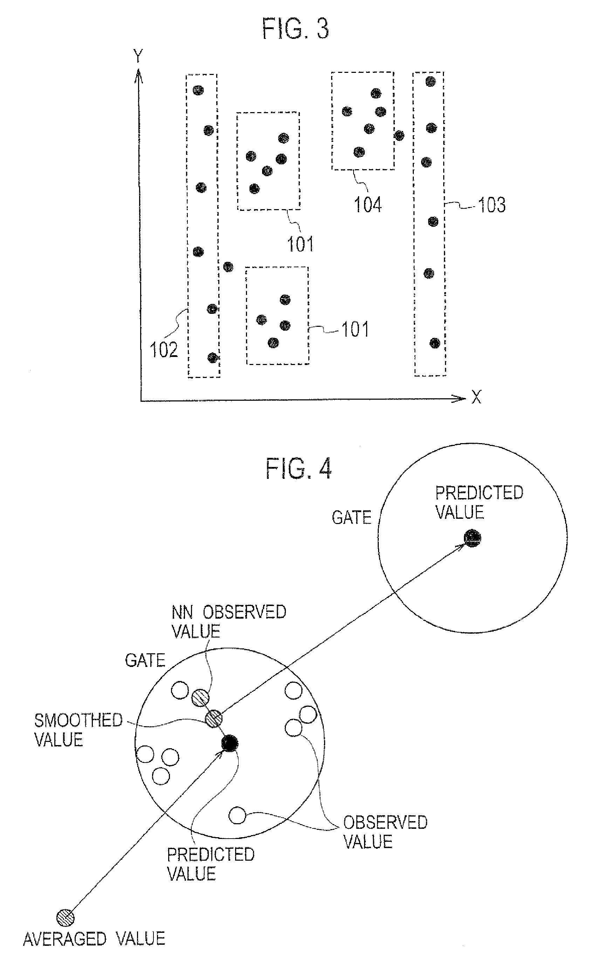

Now, in the above-described conventional radar apparatus, radar reflection points are also present in a guardrail 102, a road shoulder 103, and a stationary vehicle 104 in addition to a traveling vehicle 101 as shown in FIG. 3. Generally, in correlation tracking, as shown in FIG. 4, processing is performed in such a manner that a predicted value is determined from a smoothed value, and a new smoothed value is determined from this predicted value and an NN (Nearest Neighbor) based observed value, and then the next predicted value is calculated. However, since these processing are performed based on the observation position, there is a possibility of misidentifying a target vehicle and tracking a wrong target among many reflection points including the reflections of the background, and also the number of potential targets may exceed the number of traceable targets, thus stable correlation tracking may not be performer.

[Prior Art Document]

[Non-patent Document]

[Non-patent Document 1] Takashi Yoshida (editorial supervision), "Radar Technology, revised version", the Institute of Electronics, Information and Communication Engineers, pp. 274 and 275 (1996)

[Disclosure of the Invention]

[Problems to be Solved by the Invention]

As described above, in a conventional radar apparatus, if the antenna beamwidth is wide and the resolution of the beat frequency axis in accordance with the FMCW system is low in an environment where many complex reflection points such other vehicles or backgrounds are present, multiple reflection points are present in each main lobe of both of the angle axis and the frequency axis, thus reception is disturbed due to vector composition with respect to amplitude and phase. Thus, a problem occurs in that the target cannot be detected, or the positional accuracy of the target is low even if the target is detected, and a stable positional detection cannot be performed even by correlation tracking.

An object of the present invention is to provide a radar apparatus capable of achieving stable correlation tracking.

[Means for Solving the Problems]

To solve the problem, the present invention includes: a transmitter/receiver that transmits/receives an FMCW based sweep signal; a velocity grouping unit that performs grouping of a target for each velocity range by a velocity of the target calculated based on the sweep signal from the transmitter/receiver; and a correlation tracking unit that performs correlation tracking for each velocity group which is grouped by the velocity grouping unit.

Furthermore, the present invention includes: a transmitter/receiver that transmits/receives an FMCW based sweep signal; a velocity grouping unit that performs grouping of a target for each velocity range by a velocity of the target calculated based on the sweep signal from the transmitter/receiver, extracts self-velocity based on a frequency of a velocity histogram for each velocity range, divides a range within a velocity group containing the self-velocity, calculates a histogram of a crossrange for each divided range, calculates a crossrange position with maximum frequency of the calculated histogram, and performs a curve fitting to extract a curve of reflection points by using the crossrange position with maximum frequency, extracted for the each divided range; and a correlation tracking unit that performs correlation tracking for each velocity group which is grouped by the velocity grouping unit.

[Effects of the Invention]

According to the present invention, positional accuracy of the observed target can be increased to achieve stable correlation tracking even in a complex background.

Also, according to the present invention, curves of guardrails or road shoulders are extracted to reduce undesired reflection points so that stable correlation tracking can be achieved. That is, a curve tracing a road shoulder can be extracted by extracting the self-velocity by grouping the velocities, dividing the ranges, calculating a cross-range position where the frequency of histogram becomes the maximum for each divided range, and calculating the fitting curve. Thus, by removing the reflection points outside the road shoulder as undesired reflection points, stable correlation tracking can be achieved.

[Brief Description of Drawings]

[FIG. 1] FIG. 1 is a system diagram showing a configuration of a conventional radar apparatus.
[FIG. 2] FIG. 2 is a flowchart showing correlation tracking processing performed in the conventional radar apparatus.
[FIG. 3] FIG. 3 is a system diagram showing a problem of the conventional radar apparatus.
[FIG. 4] FIG. 4 is a system diagram showing a problem of the conventional radar apparatus.
[FIG. 5] FIG. 5 is a system diagram showing a configuration of a radar apparatus according to Embodiment 1 of the present invention.
[FIG. 6] FIG. 6 is a flowchart showing correlation tracking processing performed in the radar apparatus according to Embodiment 1 of the present invention.
[FIG. 7] FIG. 7 is a diagram, for illustrating self-velocity extraction performed in the radar apparatus according to Embodiment 1 of the present invention.
[FIG. 8] FIG. 8 is a diagram for illustrating a velocity grouping performed in the radar apparatus according to Embodiment 1 of the present invention.
[FIG. 9] FIG. 9 is a diagram for illustrating Hough transformation performed in the radar apparatus according to Embodiment 1 of the present invention.

[FIG. 10] FIG. 10 is a diagram for illustrating the Hough transformation performed in the radar apparatus according to Embodiment 1 of the present invention.

[FIG. 11] FIG. 11 is a diagram for illustrating the Hough transformation performed in the radar apparatus according to Embodiment 1 of the present invention.

[FIG. 12] FIG. 12 is a diagram for illustrating the Hough transformation performed in the radar apparatus according to Embodiment 1 of the present invention.

[FIG. 13] FIG. 13 is a diagram for illustrating the Hough transformation performed in the radar apparatus according to Embodiment 1 of the present invention.

[FIG. 14] FIG. 14 is a diagram for illustrating correlation tracking performed in the radar apparatus according to Embodiment 1 of the present invention.

[FIG. 15] FIG. 15 is a system diagram showing a configuration of a radar apparatus according to Embodiment 2 of the present invention.

[FIG. 16] FIG. 16 is a flowchart showing correlation tracking processing performed in the radar apparatus according to Embodiment 2 of the present invention.

[FIG. 17] FIG. 17 is a flowchart showing the correlation tracking processing performed in the radar apparatus according to Embodiment 2 of the present invention.

[FIG. 18] FIG. 18 is a diagram for illustrating road shoulder detection performed in the radar apparatus according to Embodiment 2 of the present invention.

[FIG. 19] FIG. 19 is a diagram for illustrating a phenomenon that occurs in the radar apparatus according to Embodiment 2 of the present invention.

[FIG. 20] FIG. 20 is a diagram for illustrating EL angle measurement performed in a radar apparatus according to Embodiment 3 of the present invention.

[FIG. 21] FIG. 21 is a diagram for illustrating the EL angle measurement performed in the radar apparatus according to Embodiment 3 of the present invention.

[FIG. 22] FIG. 22 is a diagram for illustrating the EL angle measurement performed in the radar apparatus according to Embodiment 3 of the present invention.

[FIG. 23] FIG. 23 is a flowchart showing correlation tracking processing performed in the radar apparatus according to Embodiment 3 of the present invention.

[Best Modes for Carrying Out the Invention]

In the following, embodiments of the present invention are described in detail with reference to the drawings.

[Embodiment 1]

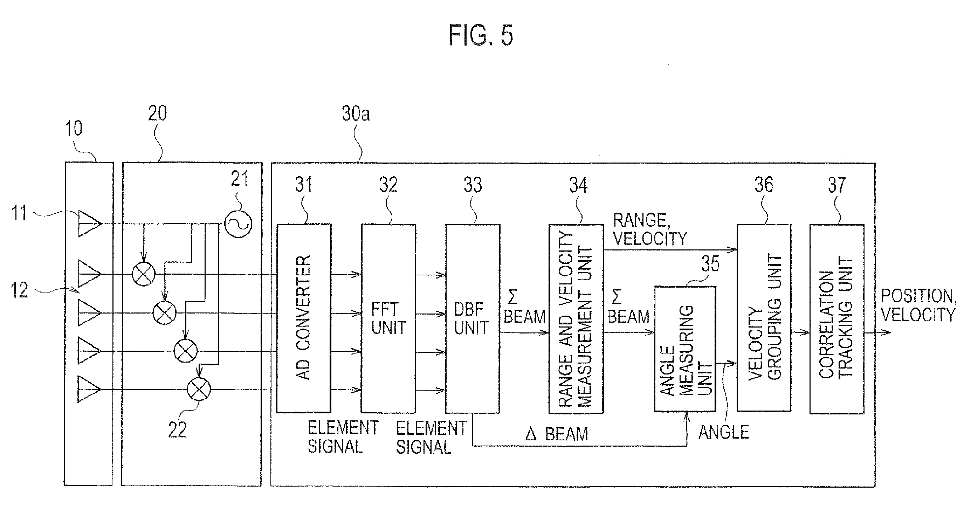

FIG. 5 is a system diagram showing a configuration of a radar apparatus according to Embodiment 1 of the present invention. The radar apparatus includes an antenna 10, a transmitter/receiver 20, and a signal processor 30.

The antenna 10 is configured with an antenna transmitting element 11 and multiple antenna receiving elements 12. The antenna transmitting element 11 converts a transmission signal transmitted from the transmitter/receiver 20 as an electrical signal into a radio wave to send it to the outside. Multiple antenna receiving elements 12 receive radio waves from the outside to convert them into electrical signals, and send the signals as reception signals to the transmitter/receiver 20.

The transmitter/receiver 20 includes a transmitter 21 and multiple mixers 22. The multiple mixers 22 are provided for respective multiple antenna receiving elements 12. In the case of an FMCW system using common up-chirp and down-chirp transmission signals, a transmission signal swept by the transmitter 21 is generated, and is sent to the antenna transmission element 11 and multiple mixers 22. The multiple mixers 22 convert the frequencies of reception signals received from respective multiple antenna reception elements 12 according to a signal from the transmitter 21, and forward the resultant signals to the signal processor 30.

The signal processor 30 includes an AD converter 31, an FFT unit 32, a DBF unit 33, a range and velocity measuring unit 34, an angle measuring unit 35, a velocity grouping unit 36, and a correlation tracking unit 37.

The AD converter 31 converts an analog signal sent from the transmitter/receiver 20 into a digital signal, and forwards the digital signal to the FFT unit 32 as an element signal. The FFT unit 32 converts an element signal sent from the AD converter 31 into a signal on the frequency axis by the Fast Fourier Transform, and forwards the resultant signal to the DBF unit 33.

The DBF unit 33 forms a $\Sigma$ beam and a $\Delta$ beam using the signal on the frequency axis sent from the FFT unit 32. The E beam formed in the DBF unit 33 is sent to the range and velocity measuring unit 34, and the $\Delta$ beam formed in the DBF unit 33 is sent to the angle measuring unit 35.

The range and velocity measuring unit 34 measures range and velocity based on the Σ beam sent from the DBF unit 33. The range and velocity obtained by the range and velocity measurements in the range and velocity measuring unit 34 are sent to the velocity grouping unit 36. Also, the range and velocity measuring unit 34 forwards the Σ beam sent from the DBF unit 33 to the angle measuring unit 35.

The angle measuring unit 35 measures angle based on the Σ beam sent from the range and velocity measuring unit 34 and the Δ beam sent from the DBF unit 33. The angle obtained by the angle measurement in the angle measuring unit 35 is sent to the velocity grouping unit 36.

The velocity grouping unit 36 performs grouping by classifying each target according to the observed velocity based on the range and velocity sent from the range and velocity measuring unit 34 and the angle sent from the angle measuring unit 35. The result of the grouping in the velocity grouping unit 36 is sent to the correlation tracking unit 37.

The correlation tracking unit 37 performs correlation tracking processing based on the processing result sent from the velocity grouping unit 36. The position and velocity obtained by the processing in the correlation tracking unit 37 are sent to the outside.

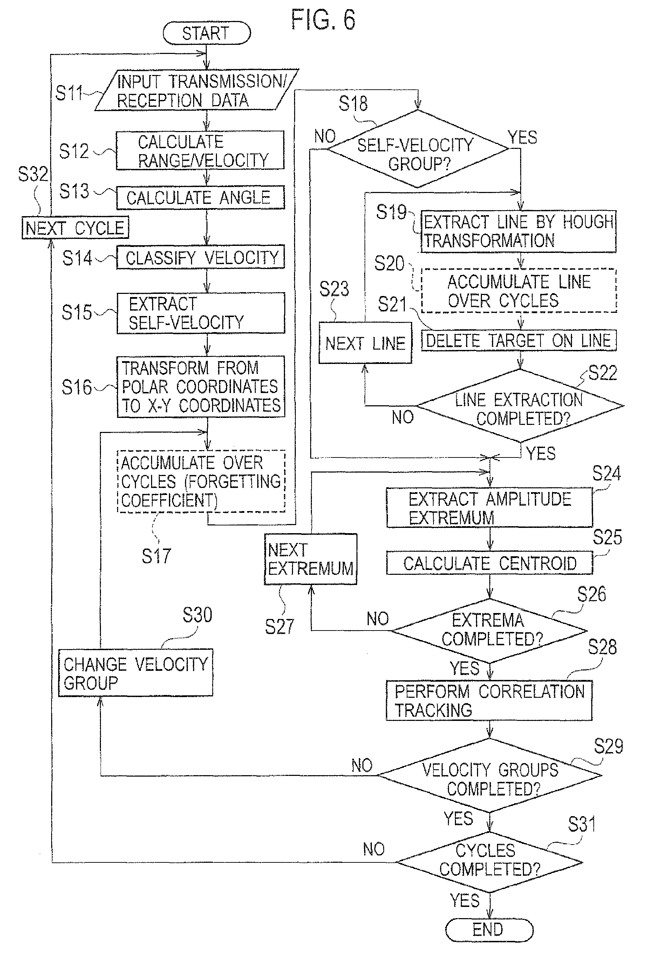

Next, operations of the radar apparatus according to Embodiment 1 of the present invention configured as mentioned above are described with reference to the flowchart shown in FIG. 6 focused on the tracking processing.

In the tracking processing, first, transmission and reception are performed by the FMCW system, and transmission/reception data is inputted (step S11). That is, a signal swept by the transmitter 21 inside the transmitter/receiver 20 is converted into a radio wave by the antenna transmission element 11, and is transmitted. Signals received by multiple antenna reception elements 12 in response to the transmission each undergo frequency conversion by multiple mixers 22, and then are sent to the signal processor 30. In the signal processor 30, a signal from the transmitter/receiver 20 is converted into a digital signal by the AD converter 31, and then is sent to the FFT unit 32 as an element signal.

The FFT unit 32 converts an element signal sent from the AD converter 31 into a signal on the frequency axis by the Fast Fourier Transform, and forwards the resultant signal to the DBF unit 33. The DBF unit 33 forms a Σ beam and a Δ beam using the signal on the frequency axis sent from the FFT unit 32. The Σ beam formed in the DBF unit 33 is sent to the range and velocity measuring unit 34, and the Δ beam formed in the DBF unit 33 is sent to the angle measuring unit 35.

A range and a velocity are then calculated (step S12). That is, the range and velocity measuring unit 34 measures range and velocity based on the Σ beam sent from the DBF unit 33, then the range and velocity obtained by the range and velocity measurements are sent to the velocity grouping unit 36.

An angle is then calculated (step S13). That is, the angle measuring unit 35 calculates an angle by using the E beam sent from the DBF unit 33 through the range and velocity measuring unit 34, and Δ beam sent from the DBF unit 33, then sends the obtained angle to the velocity grouping unit 36.

The velocity is then classified (step S14). That is, the velocity grouping unit 36 performs grouping by classifying each target according to the observed velocity based on the range and velocity sent from the range and velocity measuring unit 34, and the angle sent from the angle measuring unit 35, then sends the result of the grouping to the correlation tracking unit 37.

Self-velocity extraction is then performed (step S15). That is, the velocity grouping unit 36 determines the group with the most reflection points among the groups classified in step S14 as the self-velocity group.

The polar coordinates are then transformed into the X-Y coordinates (step S16). That is, the velocity grouping unit 36 transforms the observed velocity data acquired as expressed in the polar coordinates (R, θ) into the one as expressed in the X-Y coordinates.

The observed velocity data is then accumulated over the cycles (step S17). That is, the velocity grouping unit 36 integrates the observed velocity over the cycles through multiplication by a forgetting coefficient.

It is then checked whether the group is the self-velocity group or not (step S18). If the group is not the self-velocity group in step S18, the processing of step S 19 to S23 is skipped, and the process proceeds with step S24. On the other hand, if the group is the self-velocity group in step S 18, line extraction is performed by the Hough transformation of the self-velocity group (step S19). That is, the velocity grouping unit 36 extracts a line by the Hough transformation.

The Hough transformation is described, for example, in "Tamura, 'Computer Image Processing', Qhmsha, pp. 204 to 206 (2004)."

Line accumulation is then performed over the cycles (step S20). That is, the velocity grouping unit 36 multiplies the line extracted in step S19 by a forgetting coefficient and accumulates the resultant line over the cycles.

Targets on the line are then deleted (step S21). That is, if the accumulated result in step S20 exceeds a predetermined threshold, the velocity grouping unit 36 determines that the observed data represents a line, and deletes the reflection points near the line.

It is then checked whether the entire line extraction is completed or not (step S22). If the entire line extraction is not completed in step S22, processing for setting the next line as the target to be processed is performed (step S23). Subsequently, the process returns to step S 19 and the above-described processing is repeated.

On the other hand, if the entire line extraction is completed in step S22, an amplitude extremum is extracted (step S24). That is, for each velocity group, the velocity grouping unit 36 calculates an extremum (i.e., a local maximal value) in the group.

Centroid calculation is then performed (step S25). That is, the velocity grouping unit 36 determines the centroid in a predetermined gate based on the extrema calculated in step S24, and sends the centroid to the correlation tracking unit 37.

It is then checked whether the entire extrema are completed or not (step S26). If the entire extrema are not completed in step S26, processing for setting the next extremum as the target to be processed is performed. Subsequently, the process returns to step S24 and the above-described processing is repeated.

If the entire extrema are completed in the above-mentioned step S26, correlation tracking is performed (step S28). That is, by using the centroid position calculated for each velocity group, the correlation tracking unit 37 performs the NN (Nearest Neighbor) correlation using the point nearest to a predicted position, and tracking by α-β system, then outputs a smoothed value and a predicted value of the position and velocity vectors to the outside. The α-β system is described in "Takashi Yoshida (editorial supervision), 'Radar Technology, revised version', the Institute of Electronics, Information and Communication Engineers, pp. 264 to 267 (1996)."

It is then checked whether processing for the entire velocity groups is completed or not (step S29). If processing for the entire velocity groups is not completed in step S29, processing for changing the target processing to the next velocity group is performed (step S30). Subsequently, the process returns to step S17 and the above-described processing is repeated.

On the other hand, if processing for the entire velocity groups is completed in step S29, it is checked whether the entire cycles are completed or not (step S31). If the entire cycles are not completed in step S31, processing for setting the next cycle as the target to be processed is performed (step S32). Subsequently, the process returns to step S11 and the above-described processing is repeated. On the other hand, if the entire cycles are completed in step S31, the tracking processing is terminated.

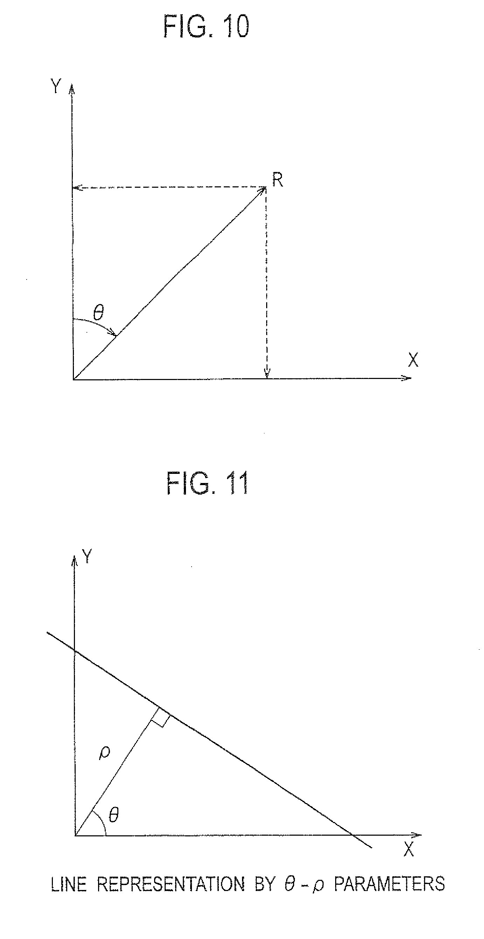

Next, in order to have a better understanding of the present invention, detailed processing of the main steps among the above-mentioned steps is described. In processing (step S16) which converts a polar coordinate into rectangular coordinates, a polar coordinate (R, θ) as shown in FIG. 10 is converted into XY coordinates by the following equation.

[Equation 1]

$$\begin{bmatrix} X \\ Y \end{bmatrix} = \begin{bmatrix} R \cdot \sin(\theta) \\ R \cdot \cos(\theta) \end{bmatrix} \quad \ldots (1)$$

where

R: range, and
θ: measured azimuth angle.

The observed (position) vector y and the smoothed or predicted vector x (position, velocity), when expressed in two dimensional X-Y, is given by the following equations:

[Equations 2]

$$y = \begin{bmatrix} y1 \\ y2 \end{bmatrix}$$

$$x = \begin{bmatrix} x1 \\ v1 \\ x2 \\ v2 \end{bmatrix} \quad \cdots (2)$$

where

indices 1, 2: X, Y components, respectively.
x: position, and
v: velocity.

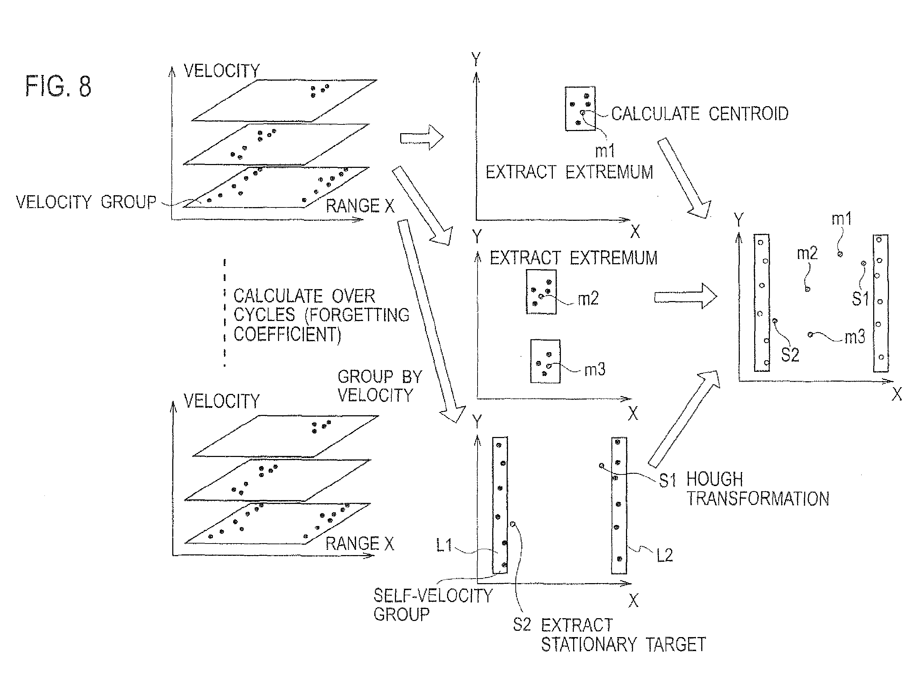

Next, the velocity classification processing performed in the above-mentioned step S14, that is, a method of grouping positions, velocities, and amplitude strengths of respective reflection points by using observed velocities is described with reference to FIG. 8. As a technique of grouping, for every cycle and for each velocity group obtained by dividing the velocity range into a predetermined number of groups, the centroid of the points around a local maximum point of amplitude strength in a gate is calculated by using the result obtained by adding observed velocities over the cycles using forgetting coefficients.

Now, a case where targets are moving is considered. Detected signal as a target to be processed includes the information of (A, X, Y, V) (amplitude strength, X axis position, Y axis position, radial velocity).

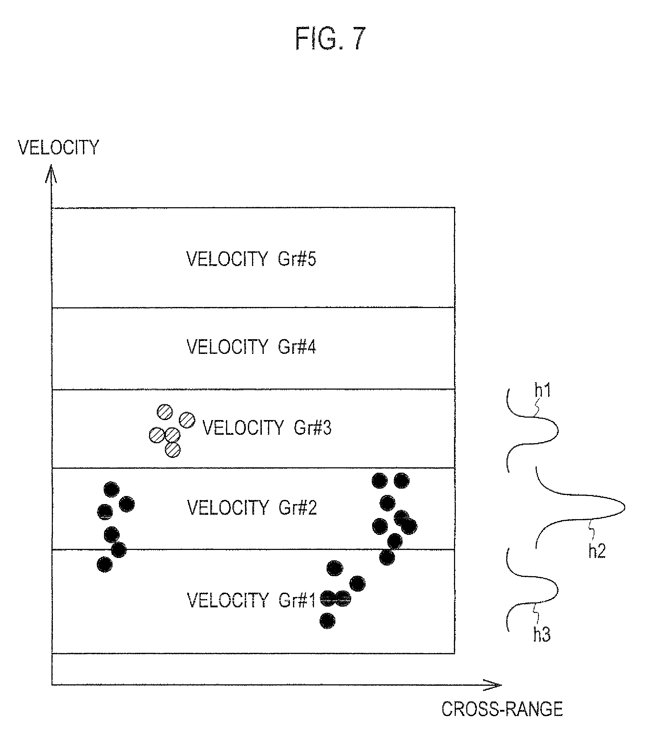

First, the detected signal is classified according to velocity, and histograms h1, h2, h3 are further calculated for respective velocity groups as shown in FIG. 7. Assuming the velocity group Gr#2 with the histogram with the most frequency is the background, the velocity groups may be classified into the groups other than the self-velocity group and the self-velocity group Gr#2. For the self-velocity group, in order to distinguish fixed targets (e.g., guardrail) L1, L2 such as the background shown in FIG. 8, and stationary vehicles S1, S2, first, as shown in step S19, reflection points in a linear shape such as the guardrail L1 and the road shoulder L2 (• potion) are extracted by using the Hough transformation.

Here, general Hough transformation is described. The Hough transformation is a method of extracting a line from an image. A line on the X-Y plane expressed in the polar coordinates is expressed in the following equation and FIG. 11.

[Equation 3]

$$\rho = X\cos\theta + Y\sin\theta \cdots (3)$$

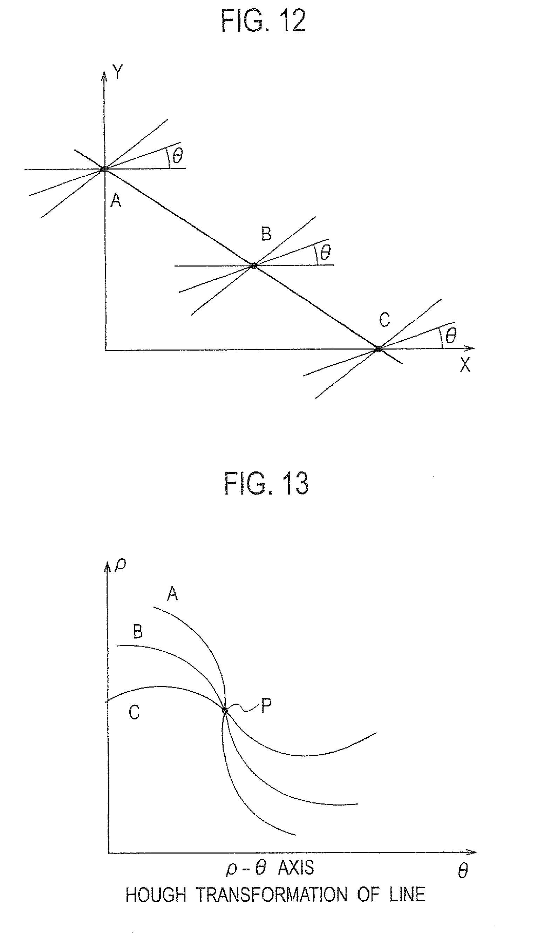

By the above equation, the line, $\rho$, and $\theta$ uniquely correspond. Next, as shown in FIG. 12, a consideration is given on three points A, B, and C on the line. A set of curves passing through each point with sequentially changed angle $\theta$, when expressed on $\rho$-$\theta$ axis, is as shown in FIG. 13. Three curves intersect at a certain point ($\rho0$, $\theta0$), which represents a common line on the X-Y axis. Based on the above principle, the steps of the Hough transformation are summarized as follows.

(1) A matrix to store numerical values on the $\rho$-$\theta$ axis is reserved.

(2) Centered on an observed value on the X-Y axis, $\rho$ on the $\rho$-$\theta$ axis is calculated for $\theta$ sequentially changed by $\Delta\theta$, and 1 is added to the element at the corresponding line, column of the matrix. This processing (2) is repeated for all of the observed values.

(3) A local maximum point ($\rho q$, $\theta q$) (q=1 to Q) is extracted from the matrix.

By the above steps, Q lines can be extracted from ($\rho q$, $\theta q$).

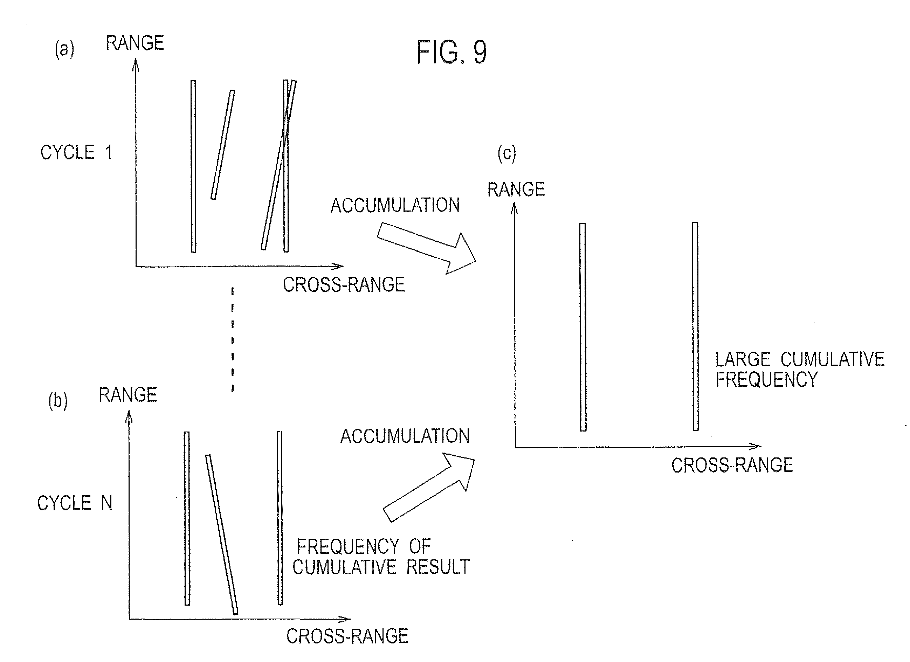

Since Hough transformation extracts a line from several points, erroneous line detection may occur. As a measure for this, as shown in FIG. 9, lines obtained by the Hough transformation for respective cycles are accumulated over the cycles (step S20), and among these, a line which exceeds a predetermined threshold is extracted. The points around the line extracted by the Hough transformation are deleted (step S21). Accordingly, the centroid position of e.g., stationary vehicle S2 near e.g., the guardrail L1 can be extracted.

Next, centroid calculation for each velocity group performed in step S25 is described. The detailed steps of the centroid calculation are as follows.

(1) By using the strength of each signal classified according to the velocity, M targets are extracted in the order from the highest strength.

(2) The relative ranges (square ranges) $\Delta R^2$ of the M targets are calculated by the following expression, and c targets at or over the lower limit $RL^2$ are extracted.

[Equation 4]

$$\Delta R_{ij}{}^2 = (Xi - Xj)^2 + (Yi - Yj)^2 \quad \dots (4)$$

where

$\Delta R^2$: square range, and
Xi, Yi: position of target i (i = 1 to N).

By repeating the above-mentioned steps (1) and (2), Mc targets are extracted.

(3) Centroid calculation is performed for the signals in the range of gate size G based on the extracted Mc positions by the following equations.

[Equations 5]

$$Xc(m) = \frac{\sum_{n=1}^{Ng} A(m,n) \cdot X(m,n)}{\sum_{n=1}^{Ng} A(m,n)}$$

$$Yc(m) = \frac{\sum_{n=1}^{Ng} A(m,n) \cdot Y(m,n)}{\sum_{n=1}^{Ng} A(m,n)} \quad \dots (5)$$

where

Xc(m), Yc(m): centroid position (m = 1 to Mc),
A(m, n): signal strength (m = 1 to Mc, n = 1 to Ng),
m: number of extracted extremum, and
n: number of signal in the gate.

Next, correlation tracking (NN correlation, the $\alpha$-$\beta$ tracking system) performed in step S28 is described. For the sake of simplicity, the description is expressed in one dimension (only X-axis or Y-axis).

Assuming that the observed (position) vector is y,

[Equations 6]

$$\text{smoothed vector is } xs = \begin{bmatrix} xs \\ vs \end{bmatrix} \text{ (position xs, velocity vs), and}$$

$$\text{predicted vector is } xp = \begin{bmatrix} xp \\ vp \end{bmatrix} \text{ (position xp, velocity vp),}$$

the correlation tracking can be expressed by the following equations:

$$yr(k, j) = y(k, j) - H \cdot xp(k)$$

$$yr(k) = \arg\min[yr(k, j)^T \cdot yr(k, j)]$$

$$xs(k) = xp(k) + K \cdot yr(k) \qquad \dots (6)$$

$$xp(k+1) = F \cdot xs(k)$$

where

yr(k, j): At k-th observation, the remaining vector for the j-th observed (position) vector,
y(k, j): j-th observed (position) vector at the k-th observation,
yr(k): remaining vector for which square error at the k-th observation is minimum,
xs(k): smoothed vector at the k-th observation,
xp(k): predicted vector at the k-th observation (the data obtained until the (k-1)th observation is used),
H: observation matrix H = [1 0],

K: gain vector $K = \begin{bmatrix} \alpha \\ \beta / T \end{bmatrix}$,

$\alpha$: constant (variable from 0 to 1),

$\beta$: $\beta = \dfrac{\alpha^2}{2 - \alpha}$,

T: cycle time (constant),

F: dynamic matrix $F = \begin{bmatrix} 1 & T \\ 0 & 1 \end{bmatrix}$,

argmin[f(X)]: outputs X at which the function f(X) has the minimum value, and T: transposition.

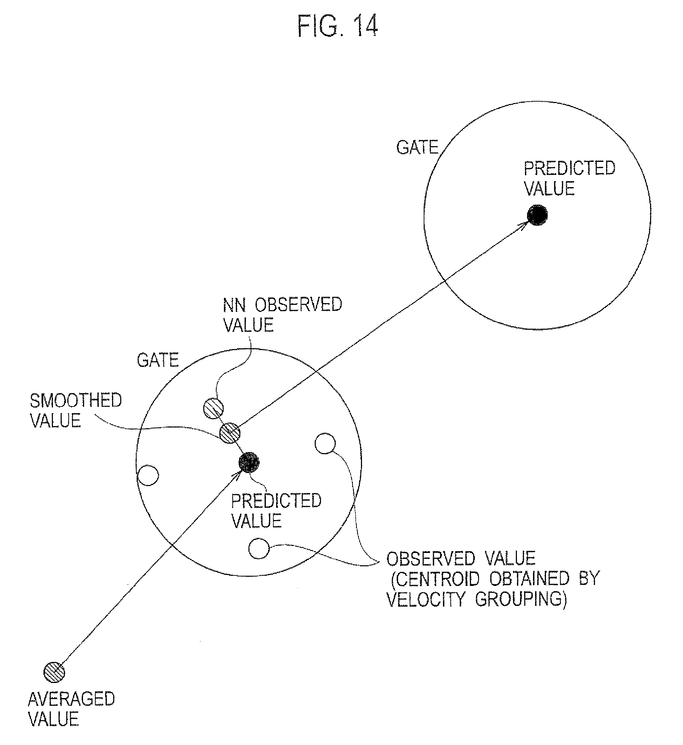

FIG. 14 is a diagram for illustrating the correlation tracking. The initial values are yr(1)= 0, and

$$xp(1, j) = \begin{bmatrix} y(1, j) \\ 0 \end{bmatrix}.$$

In the case where a great number of detection targets are present (j is multiple) in the initial values, M targets in the order from the highest S/N are set as the target for correlation tracking.

As described above, according to the radar apparatus of Embodiment 1 of the present invention, velocity can be observed simultaneously with range by the FMCW system. Thus by classifying the targets according to the velocities, even for the case of short-range targets, stable tracking can be performed if the targets have different velocities.

Also, since the correlation tracking can be performed with a reduced number of observation points through calculating the centroid around each extremum for the grouped targets, the processing load is reduced and stable tracking can be achieved.

Also, by integrating detection signals during the cycle, even in the case where the signals cannot be detected, or positional accuracy of detected signals is low, the correlation tracking can be performed using the positions that are weighted and averaged by the centroid calculation of the signals during the cycle, and thus stable tracking can be achieved.

Also, in the case where reflection points in a linear shape of a guardrail or a road shoulder are present, the correlation tracking can be performed while extracting targets parked on a road shoulder and targets in a low velocity by using the Hough transformation to extract and remove those reflection points.

In the radar apparatus according to Embodiment 1 described above, although the centroid calculation is performed for each velocity group, the correlation tracking may be performed without performing the centroid calculation.

Also, although the integration is performed over the reflection points using forgetting coefficients over the cycles, another configuration is possible in which the integration is not performed (the forgetting coefficient is 0). Also, although the line extraction is performed by applying the Hough transformation to the self-velocity group, another method that does not employ the line extraction may be used.

Also, although the integration is performed over lines to extract a line using forgetting coefficients during the cycle, another configuration is possible in which the integration is not performed (the forgetting coefficient is 0)

[Embodiment 2]

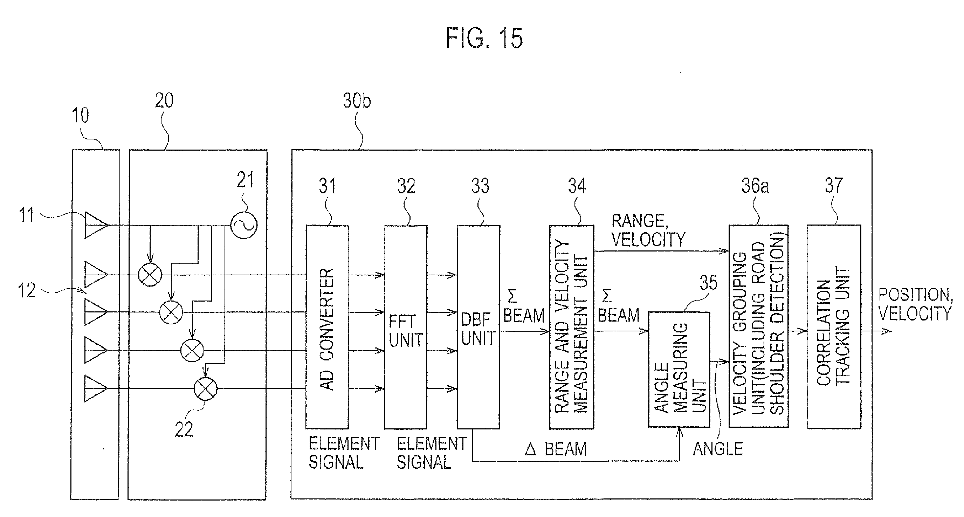

FIG. 15 is a system diagram showing a configuration of a radar apparatus according to Embodiment 2 of the present invention. This radar apparatus differs from the radar apparatus according to Embodiment 1 shown in FIG. 5 only in a velocity grouping unit 36a in a signal processor 30b, thus only the velocity grouping unit 36a is described.

The velocity grouping unit 36a performs grouping by classifying each target according to the observed velocity based on the range and velocity sent from the range and velocity measuring unit 34, and the angle sent from the angle measuring unit 35. The result of the grouping in the velocity grouping unit 36a is sent to the correlation tracking unit 37.

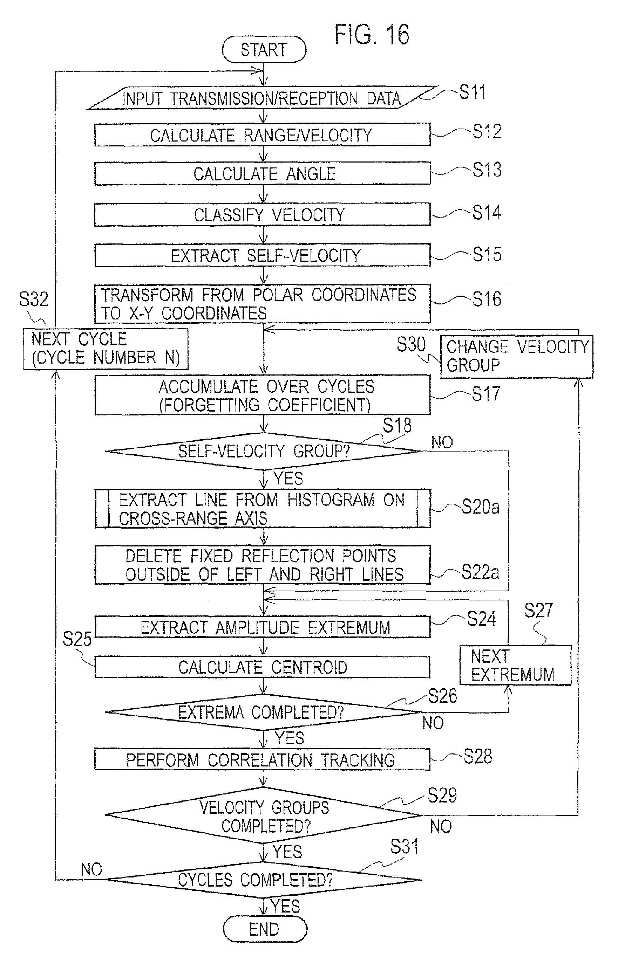

Next, operations of the radar apparatus according to Embodiment 2 of the present invention configured as mentioned above are described with reference to the flowchart shown in FIG. 16 focused on the tracking processing.

To begin with, the processing from step S11 to step S 13 are the same as that shown in FIG. 6, thus its description is omitted.

The velocity is then classified (step S14). That is, the velocity grouping unit 36a performs grouping by classifying each target according to the observed velocity based on the range and velocity sent from the range and velocity measuring unit 34, and the angle sent from the angle measuring unit 35, then sends the result of the grouping to the correlation tracking unit 37.

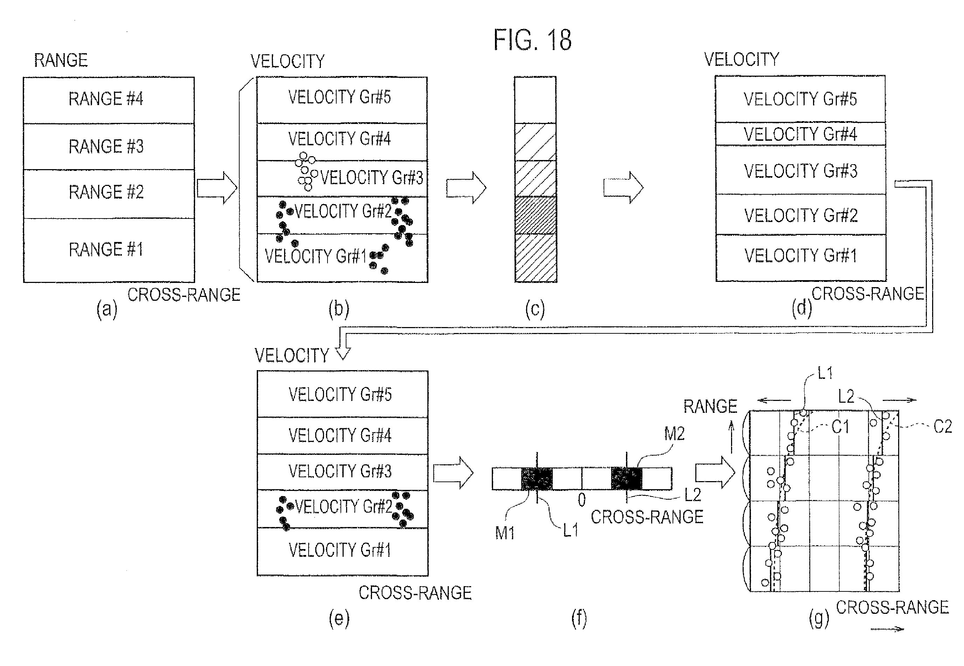

Self-velocity extraction is then performed (step S 15). That is, the velocity grouping unit 36a determines the group with the most reflection points among the groups classified in step S 14 as the self-velocity group. As shown in FIG. 7 and FIG. 18(c), histograms h1, h2, and h3 are calculated for each velocity group, and velocity group Gr#2 with the most frequency (reflection points) is extracted based on these histograms (FIG. 18(d), FIG. 18(e)).

The polar coordinates are then transformed into the X-Y coordinates (step S16). That is, the velocity grouping unit 36a transforms the observed velocity data acquired as expressed in the polar coordinates (R, θ) into the one as expressed in the X-Y coordinates.

The observed velocity data is then accumulated over the cycles (step S 17). That is, the velocity grouping unit 36a integrates the observed velocity data over the cycles through multiplying by a forgetting coefficient.

It is then checked whether the group is the self-velocity group or not (step S 18). If the group is not the self-velocity group in step S18, the processing of steps S20, S22 is skipped, and the process proceeds to step S24.

On the other hand, if the group is the self-velocity group in step S 18, the line extraction is performed based on the histograms on the cross-range axis (step S20a). That is, the velocity grouping unit 36a extracts the lines on both sides based on the histograms on the cross-range axis. The details of the processing are described later.

Fixed reflection points outside of the lines on both sides are deleted (step S22a). An amplitude extremum is then extracted (step S24). That is, for each velocity group, the velocity grouping unit 36 calculates an extremum (i.e., a local maximal value) in the group.

Centroid calculation is then performed (step S25). That is, the velocity grouping unit 36a determines the centroid in a predetermined gate based on the extrema calculated in step S24, and sends the centroid to the correlation tracking unit 37.

The processing from step S26 to step S31 are the same as that shown in FIG. 6, thus its description is omitted.

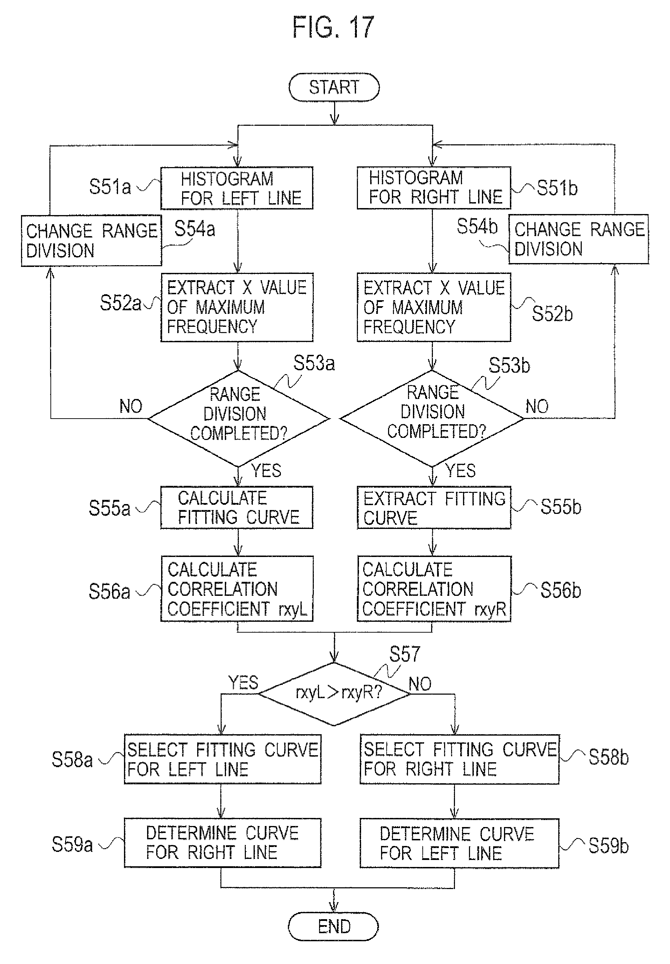

Next, in order to have a better understanding of the present invention, the processing in step 20a, which is the main step among the above-mentioned steps is described in detail with reference to the flowchart of FIG. 17 and FIG. 18.

First, as described above, the velocity group Gr#2 with the most frequency (reflection points) is extracted (FIG. 18(d), FIG. 18(e)).

Next, as shown in FIG. 18(f), cross-range position M1 where the frequency becomes the maximum on the left (negative) range from 0, and the line L1 passing through the center of the cross-range position M1 are extracted where the cross-range position of the self-vehicle is assumed to be 0. That is, the histogram of the left line (left range) is calculated (step S51a), and the cross-range position where the frequency becomes the maximum is extracted (step S52a).

It is then checked whether range division is terminated or not (step S53a). If the range division is not completed, the range division is changed (step S54a), and the processing of steps S51a to 52a is repeated. That is, by performing the processing of steps S51a to S2a for each of the ranges #1 to #4, each extracted line L1 in FIG. 18(g) is obtained.

Subsequently, as shown in FIG. 18(g), by curve fitting the positions on the cross-range based on respective extracted lines L1 for the ranges #1 to #4, fitting curve C1 on the left is calculated (step S55a). Correlation coefficient rxyL is then calculated based on the fitting curve C1 on the left (step SS6a).

Next, as shown in FIG. 18(f), cross-range position M2 where the frequency becomes the maximum on the right (positive) range from 0, and the line L2 passing through the center of the cross-range position M2 are extracted where the cross-range position of the self-vehicle is assumed to be 0. That is, the histogram of the right line (right range) is calculated (step S51b), and the cross-range position where the frequency becomes the maximum is extracted (step S52b).

It is then checked whether range division is completed or not (step S53b). If the range division is not completed, the range division is changed (step S54b), and the processing of steps S51b and 52b is repeated. That is, by performing the processing of steps S51b and 52b for each of the ranges #1 to #4, each extracted line L2 in FIG. 18(g) is obtained.

Subsequently, as shown in FIG. 18(g), by curve fitting the positions on the range-crossrange based on respective extracted lines L2 for the ranges #1 to #4, fitting curve C2 on the left is calculated (step S55b). Correlation coefficient rxyR is then calculated based on the fitting curve C2 on the left (step S56b).

It is then checked whether the correlation coefficient rxyL is greater than the correlation coefficient rxyR (step S57). If the correlation coefficient rxyL is greater than the correlation coefficient rxyR, the fitting curve of the left line is selected (step S58a), and the curve of the right line is calculated (step S59a). If the correlation coefficient rxyL is smaller than the correlation coefficient rxyR, the fitting curve of the right line is selected (step S58b), and the curve of the left line is calculated (step S59b).

The above processing is a method of extracting a curve corresponding to a road shoulder. The curve for the road shoulder can be used to reduce fixed reflection points such as a road shoulder. Accordingly, observed values outside the curve of the road shoulder may be deleted from the observed values of the reflection points.

Next, a method of calculating the above-mentioned fitting curve is described. Generally, the fitting curve can be expressed by the following equation.

[Equation 7]

$$yi = c0 \cdot xi^n + c1 \cdot xi^{n-1} + c1 \cdot xi^{n-1} + \ldots + cn \ldots (1)$$

where

xi: range for fitting (i = 1 to n),
yi: the cross-range for xi, and
cn: fitting coefficient.

As an index showing a degree of fitting of the fitting coefficient cn, correlation coefficient rxy expressed by the following equation is known.

[Equation 8]

$$rxy = \frac{\frac{1}{n}\sum_{i=1}^{n}(xi - xave)\cdot(yi - yave)}{\sqrt{\frac{1}{n}\sum_{i=1}^{n}(xi - xave)^2 \cdot \frac{1}{n}\sum_{i=1}^{n}(xi - xave)^2}} \ldots (2)$$

where

xave: average of x, and
yave: average of y.

When the fitting curves for both sides are extracted, if either correlation coefficients rxy is less than a predetermined threshold, it is desirable to determine the fitting curves for both sides based on the curve with a higher correlation coefficient rxy without using the fitting curves. In this case, since the constant term of the equation (1) shows the center position of the cross-range, the constant term is used for both of the fitting curves, and the terms of the first order or more are used.

As an index showing a degree of fitting, a method of using correlation coefficients has been described; however, other index such as a coefficient of determination may also be used. Also, although a processing method in which the cross-range is divided into the left range and the right range of the self-vehicle has been described, the cross-range position with the maximum frequency and another cross-range position with the second maximum frequency may also be used without dividing the cross-range as described above.

As described above, according to the radar apparatus according to Embodiment 2 of the present invention, a curve tracing a road shoulder can be extracted by extracting the self-velocity by grouping the velocities, dividing the ranges, calculating a cross-range position where the frequency of histogram becomes the maximum for each divided range, and calculating the fitting curve. Thus, by removing the reflection points outside the road shoulder as undesired reflection points, stable correlation tracking can be achieved.

[Embodiment 3]

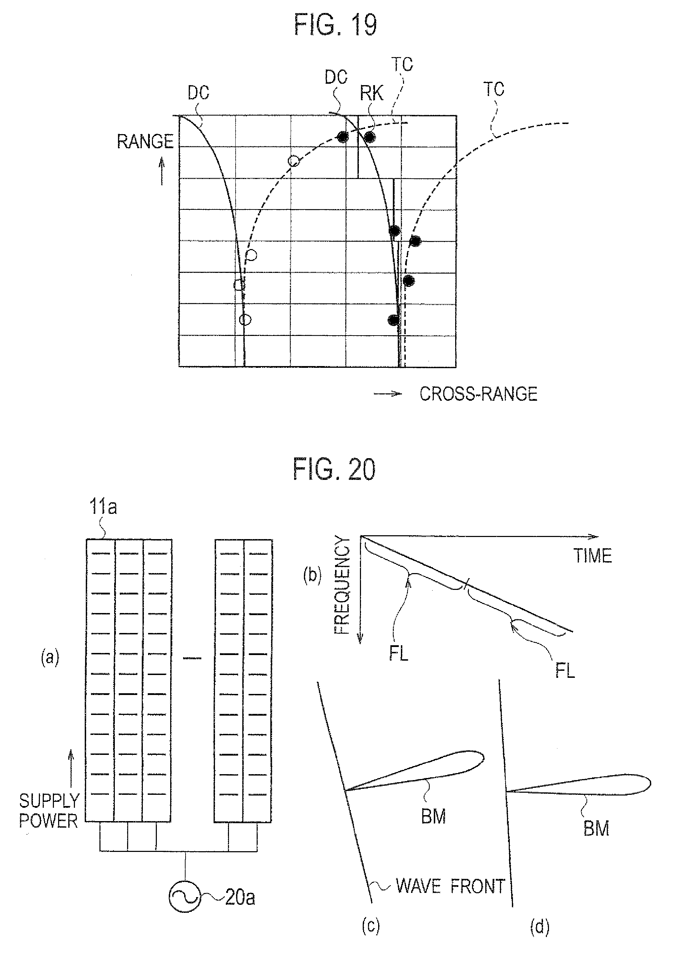

Next, a radar apparatus according to Embodiment 3 of the present invention is described. On the range-crossrange plane in FIG. 19, true curve for which curve fitting is performed (dashed line), and actually detected curve (solid line) are shown. If e.g., a bridge over a road is present, as shown in FIG. 19, a reflection point RK may be observed near the center of the road. When curve fitting is performed, detected curve DC passes near the reflection point RK. That is, an error occurs between true curvilinear TC and the detected curve DC.

In order to reduce this error, the radar apparatus according to Embodiment 3 performs elevation angle measurement (EL angle measurement), and deletes a reflection point from extracted points if the reflection point is higher than a predetermined level, and performs the processing of the radar apparatus according to Embodiment 2.

FIG. 20 is a diagram for illustrating the EL angle measurement performed in the radar apparatus according to Embodiment 3 of the present invention. In a slot antenna 11a (slot waveguide), slots are arranged in a matrix form as shown in FIG. 20(a), and electric power is supplied from transmitter 20a connected to one end of the slot antenna 11a. The radar apparatus changes the phase of antenna surface (slope of the wave front) as shown in FIGS. 20(c) and 20 (d) by changing center frequency FH and FL as shown in FIG. 20(b) so that orientation of beam BM is changed in the direction of an elevation angle.

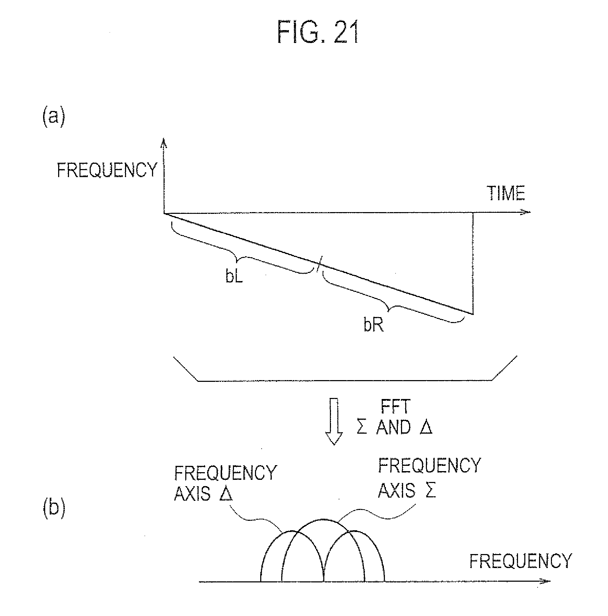

Here, a method of changing the center frequency is described. In the case of the FMCW system, as shown in FIG. 21, downsweep signal (or upsweep signal) which linearly changes the frequency from high (low) to low (high) is used. The downsweep signal or upsweep is transmitted/received by the transmitter/receiver 20. The FFT unit 32 performs the FFT on the reception signal from the transmitter/receiver 20, and converts the resultant signal into a beat frequency $\Sigma$.

Also, as shown in FIG. 21(a), by dividing each downsweep or upsweep signal into bL in the fist half and bR in the second half with the signs of the bL and the bR opposite to each other, and performing the FFT by the FFT unit 32, the $\Delta$ beam shown in FIG. 21(b) is obtained. The angle measuring unit 35 can obtain a beat frequency with a high accuracy by performing phase monopulse processing on the frequency axis using the $\Sigma$ beam and the $\Delta$ beam. By using the $\Sigma$ beam and the $\Delta$ beam, $\Sigma$ beam signal bL and $\Sigma$ beam signal bR for the first half and the second half of each sweep waveform can be obtained, respectively by the following equations.

[Equations 9]

$$\Sigma = bL + bR$$

$$\Delta = bL - bR$$

$$bL = \frac{\Sigma + \Delta}{2} \quad \dots (3)$$

$$bR = \frac{\Sigma - \Delta}{2}$$

where

$\Sigma$: FFT signal of $\Sigma$ of sweep signal,
$\Delta$: FFT signal of $\Delta$ of sweep signal,
bL: $\Sigma$ signal of the first half of sweep, and
bR: $\Sigma$ signal of the second half of sweep.

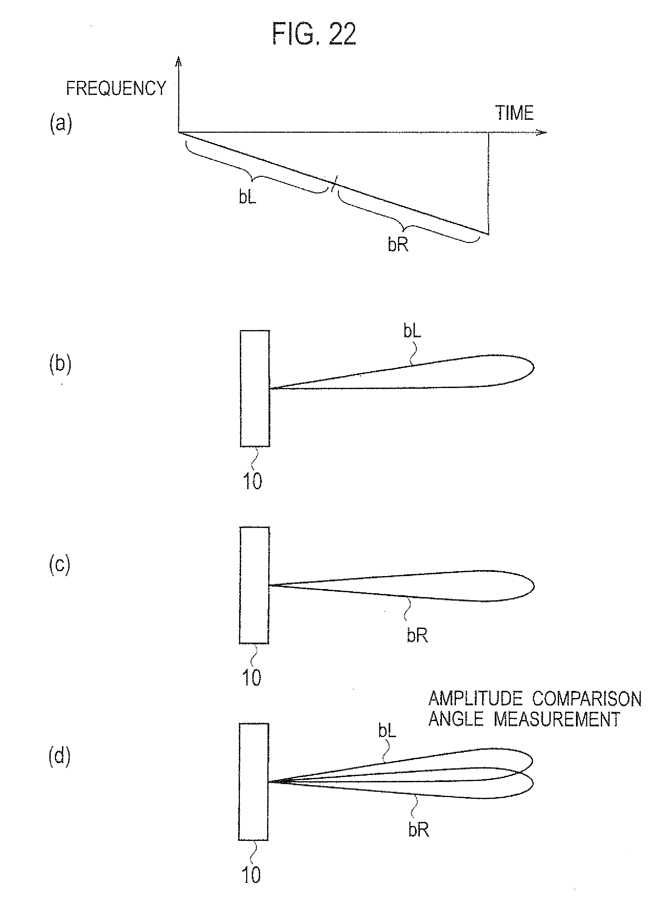

Since the bL and bR have different center frequencies, two beams bL and bR having different EL surfaces are accordingly formed as shown in FIGS. 22(b) to 22(d). Thereby, the angle measuring device 35 can calculate an error voltage in the following equation.

[Equation 10]

$$\varepsilon = \frac{abs(bR)}{abs(bL)} \quad \dots (4)$$

where

abs: absolute value.

The angle measuring unit 35 can calculate an elevation angle by comparing the error voltage and a pre-acquired reference table of error voltage. If the elevation angle of an observed value is greater than a predetermined threshold, the velocity grouping unit 36a determines that the observed point is a reflection point at a high altitude such as a bridge over a road by using the elevation angle obtained in the angle measuring unit 35, and then deletes the reflection point to calculate a fitting curve so that the influence of e.g., the bridge can be suppressed. The processing after the fitting curve is extracted is the same as that of the radar apparatus according to Embodiment 2.

As described above, according to the radar apparatus according to Embodiment 3 of the present invention, only reflection points at a high altitude such as a bridge over a road are deleted after extracting reflection points near the road surface by measuring their elevation angles, thus a fitting curve is extracted using reflection points of e.g., a guardrail or a road shoulder and the reflection points outside the road shoulder are suppressed as undesired reflection points so that stable correlation tracking can be achieved.

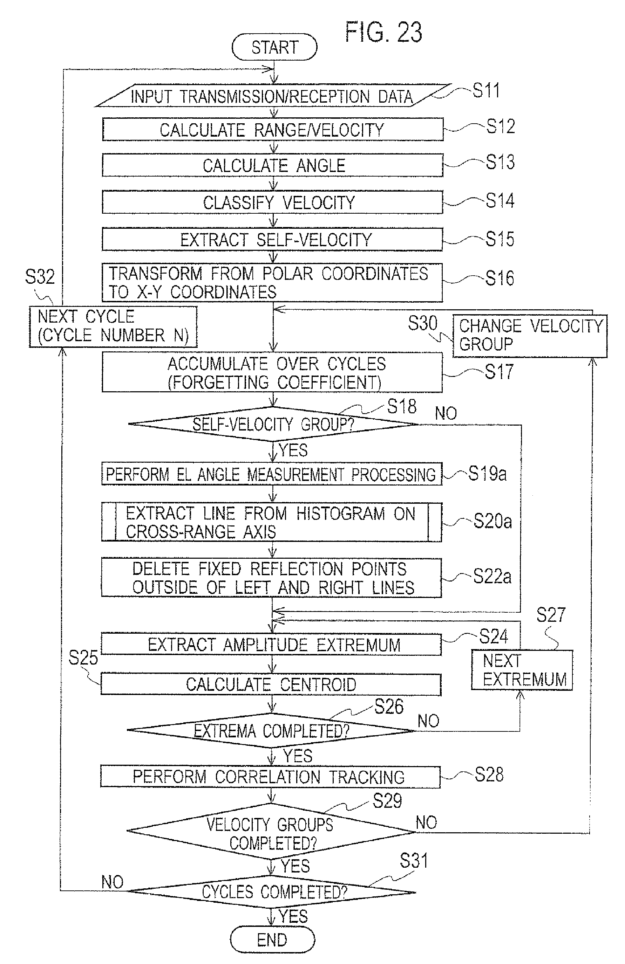

FIG. 23 is a flowchart showing correlation tracking processing performed in the radar apparatus according to Embodiment 3 of the present invention. The flowchart shown in FIG. 23 is configured by inserting the above-mentioned EL angle measuring processing (step S19a) between step S18 and step S20 in the flowchart shown in FIG. 16.

For the radar apparatus according to Embodiment 3, a method of using a frequency scan as an EL angle measuring technique has been described; however, other EL angle measuring technique such as phase monopulse angle measurement, or amplitude comparison angle measurement may be used by switching a beam or scanning a beam with a phase shifter.

[Industrial Applicability]

The present invention may be applied to a radar apparatus that measures the velocity of a vehicle with a high accuracy.

[Reference Signs List]

10 antenna
11 antenna transmission element
12 antenna reception element
20 transmitter/receiver
21 transmitter
22 mixer
30 signal processor
31 AD converter
32 FFT unit
33 DBF unit
34 range and velocity measuring unit
35 angle measuring unit
36 velocity grouping unit
37 correlation tracking unit

**Claims**

1. A radar apparatus comprising:

   a transmitter/receiver that transmits/receives an FMCW based sweep signal;
   a velocity grouping unit that performs grouping of a target for each velocity range by a velocity of the target calculated based on the sweep signal from the transmitter/receiver; and
   a correlation tracking unit that performs correlation tracking for each velocity group which is grouped by the velocity grouping unit.

2. The radar apparatus according to claim 1, wherein
   the velocity grouping unit performs centroid calculation that calculates a centroid position for each of the velocity group, and
   the correlation tracking unit performs correlation tracking on a grouped target by using the centroid position calculated for each velocity group by the velocity grouping unit.

3. The radar apparatus according to claim 1, wherein
   the velocity grouping unit integrates a velocity using a forgetting coefficient over cycles, and
   the correlation tracking unit performs correlation tracking on a grouped target by using a result of integration over the cycles performed by the velocity grouping unit using the forgetting coefficient.

4. The radar apparatus according to claim 2, wherein
   the velocity grouping unit extracts a velocity group with the most reflection points from the target as a self-velocity group, extracts a line in the extracted self-velocity group by Hough transformation, and performs centroid calculation over reflection points by deleting a reflection point of position at which a result of accumulation by multiplying the extracted line by a forgetting coefficient exceeds a predetermined threshold.

5. A radar apparatus comprising:

   a transmitter/receiver that transmits/receives an FMCW based sweep signal;
   a velocity grouping unit that performs grouping of a target for each velocity range by a velocity of the target calculated based on the sweep signal from the transmitter/receiver, extracts self-velocity based on a frequency of a velocity histogram for each velocity range, divides a range within a velocity group containing the self-velocity, calculates a histogram of a crossrange for each divided range, calculates a crossrange position with maximum frequency of the calculated histogram, and performs a curve fitting to extract a curve of reflection points by using the crossrange position with maximum frequency, extracted for the each divided range; and
   a correlation tracking unit that performs correlation tracking for each velocity group which is grouped by the velocity grouping unit.

6. The radar apparatus according to claim 5, further comprising:

   an antenna that changes a beam in a direction of an elevation angle by changing a frequency;
   a Fast Fourier Transform unit that performs Fast Fourier Transform on a first half and a second half of a signal received from the antenna to obtain $\Sigma 1$ signal and $\Sigma 2$ signal; and
   an angle measuring unit that calculates an elevation angle of the reflection point by elevation angle measurement using an amplitude ratio between the $\Sigma 1$ signal and the $\Sigma 2$ signal obtained in the Fast Fourier Transform unit, wherein
   the velocity grouping unit deletes a reflection point exceeding a predetermined angle value based on the elevation angle calculated by the angle measuring unit.

# FIG. 1

EP 2 437 079 A1

# FIG. 2

```
                    START

            INPUT TRANSMISSION/        S101
            RECEPTION DATA

            CALCULATE                  S102
   S106     RANGE/VELOCITY

   NEXT CYCLE
            CALCULATE ANGLE            S103

            PERFORM CORRELATION        S104
            TRACKING

                                       S105
       NO   CYCLES
            COMPLETED?

            YES

                    END
```

# FIG. 3

# FIG. 4

# FIG. 5

EP 2 437 079 A1

## FIG. 6

START

S11 — INPUT TRANSMISSION/ RECEPTION DATA

S12 — CALCULATE RANGE/VELOCITY

S13 — CALCULATE ANGLE

S32 — NEXT CYCLE

S14 — CLASSIFY VELOCITY

S15 — EXTRACT SELF-VELOCITY

S16 — TRANSFORM FROM POLAR COORDINATES TO X-Y COORDINATES

ACCUMULATE OVER CYCLES (FORGETTING COEFFICIENT)

S17

S18 — SELF-VELOCITY GROUP?

NO — YES

S19 — EXTRACT LINE BY HOUGH TRANSFORMATION

S20 — ACCUMULATE LINE OVER CYCLES

S23 — NEXT LINE

S21 — DELETE TARGET ON LINE

S22 — LINE EXTRACTION COMPLETED?

NO

YES

S24 — EXTRACT AMPLITUDE EXTREMUM

NEXT EXTREMUM

S25 — CALCULATE CENTROID

S27

S26 — EXTREMA COMPLETED?

NO

YES

S30 — CHANGE VELOCITY GROUP

S28 — PERFORM CORRELATION TRACKING

S29 — VELOCITY GROUPS COMPLETED?

NO

YES

S31 — CYCLES COMPLETED?

NO

YES

END

# FIG. 7

FIG. 8

EP 2 437 079 A1

FIG. 9

(a) RANGE
CYCLE 1
CROSS-RANGE

ACCUMULATION

(b) RANGE
CYCLE N
CROSS-RANGE

ACCUMULATION

FREQUENCY OF CUMULATIVE RESULT

(c) RANGE
LARGE CUMULATIVE FREQUENCY
CROSS-RANGE

## FIG. 10

## FIG. 11

LINE REPRESENTATION BY $\theta$-$\rho$ PARAMETERS

# FIG. 12

# FIG. 13

$\rho - \theta$ AXIS

HOUGH TRANSFORMATION OF LINE

# FIG. 14

FIG. 15

EP 2 437 079 A1

# FIG. 16

```
                        START
                          │
                          ▼
      INPUT TRANSMISSION/RECEPTION DATA        S11
                          │
                          ▼
          CALCULATE RANGE/VELOCITY             S12
                          │
                          ▼
             CALCULATE ANGLE                   S13
                          │
                          ▼
             CLASSIFY VELOCITY                 S14
                          │
                          ▼
           EXTRACT SELF-VELOCITY              S15
                          │
                          ▼
      TRANSFORM FROM POLAR COORDINATES        S16
            TO X-Y COORDINATES
                          │
S32                       │          S30    CHANGE VELOCITY
  NEXT CYCLE              │                  GROUP
  (CYCLE NUMBER N)        ▼
          ACCUMULATE OVER CYCLES              S17
          (FORGETTING COEFFICIENT)
                          │
                          ▼        S18
             SELF-VELOCITY GROUP?           NO
                          │ YES
                          ▼
       EXTRACT LINE FROM HISTOGRAM ON        S20a
       CROSS-RANGE AXIS
                          │
                          ▼
       DELETE FIXED REFLECTION POINTS        S22a
       OUTSIDE OF LEFT AND RIGHT LINES
                          │
                          ▼
        EXTRACT AMPLITUDE EXTREMUM    S24      S27
S25                       │
          CALCULATE CENTROID                  NEXT
                          │                   EXTREMUM
                          ▼        S26
             EXTREMA COMPLETED?             NO
                          │ YES
                          ▼
       PERFORM CORRELATION TRACKING          S28
                          │
                          ▼        S29
             VELOCITY GROUPS               NO
             COMPLETED?
                          │ YES      S31
   NO                     ▼
             CYCLES COMPLETED?
                          │ YES
                          ▼
                         END
```

# FIG. 17

START

S51a — HISTOGRAM FOR LEFT LINE

HISTOGRAM FOR RIGHT LINE — S51b

CHANGE RANGE DIVISION — S54a

S54b — CHANGE RANGE DIVISION

S52a — EXTRACT X VALUE OF MAXIMUM FREQUENCY

EXTRACT X VALUE OF MAXIMUM FREQUENCY — S52b

S53a — RANGE DIVISION COMPLETED? — NO

RANGE DIVISION COMPLETED? — S53b — NO

YES

YES

S55a — CALCULATE FITTING CURVE

EXTRACT FITTING CURVE — S55b

S56a — CALCULATE CORRELATION COEFFICIENT rxyL

CALCULATE CORRELATION COEFFICIENT rxyR — S56b

S57 — rxyL > rxyR? — YES / NO

S58a — SELECT FITTING CURVE FOR LEFT LINE

SELECT FITTING CURVE FOR RIGHT LINE — S58b

S59a — DETERMINE CURVE FOR RIGHT LINE

DETERMINE CURVE FOR LEFT LINE — S59b

END

FIG. 18

EP 2 437 079 A1

# FIG. 19

# FIG. 20

# FIG. 21

(a)

(b)

## FIG. 22

(a)

FREQUENCY

TIME

bL

bR

(b)

bL

10

(c)

bR

10

(d)

AMPLITUDE COMPARISON
ANGLE MEASUREMENT

bL

bR

10

# FIG. 23

START

INPUT TRANSMISSION/RECEPTION DATA — S11

CALCULATE RANGE/VELOCITY — S12

CALCULATE ANGLE — S13

CLASSIFY VELOCITY — S14

EXTRACT SELF-VELOCITY — S15

TRANSFORM FROM POLAR COORDINATES TO X-Y COORDINATES — S16

S32 NEXT CYCLE (CYCLE NUMBER N)

S30 CHANGE VELOCITY GROUP

ACCUMULATE OVER CYCLES (FORGETTING COEFFICIENT) — S17

SELF-VELOCITY GROUP? — S18 NO

YES

PERFORM EL ANGLE MEASUREMENT PROCESSING — S19a

EXTRACT LINE FROM HISTOGRAM ON CROSS-RANGE AXIS — S20a

DELETE FIXED REFLECTION POINTS OUTSIDE OF LEFT AND RIGHT LINES — S22a

EXTRACT AMPLITUDE EXTREMUM — S24

S27 NEXT EXTREMUM

S25 CALCULATE CENTROID

EXTREMA COMPLETED? — S26 NO

YES

PERFORM CORRELATION TRACKING — S28

VELOCITY GROUPS COMPLETED? — S29 NO

YES

NO CYCLES COMPLETED? — S31

YES

END

| INTERNATIONAL SEARCH REPORT | International application No. |
|---|---|
| | PCT/JP2010/054840 |

A. CLASSIFICATION OF SUBJECT MATTER
*G01S13/34*(2006.01)i, *G01S7/02*(2006.01)i, *G01S13/44*(2006.01)i, *G01S13/66*
(2006.01)i

According to International Patent Classification (IPC) or to both national classification and IPC

B. FIELDS SEARCHED

Minimum documentation searched (classification system followed by classification symbols)
G01S7/00-7/42, G01S13/00-13/95

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2009-092410 A (Fujitsu Ten Ltd.),<br>30 April 2009 (30.04.2009),<br>paragraphs [0088] to [0095]<br>(Family: none) | 1<br>2,3<br>4-6 |
| Y<br>A | JP 2006-047050 A (Mitsubishi Electric Corp.),<br>16 February 2006 (16.02.2006),<br>paragraphs [0067] to [0070]<br>(Family: none) | 2<br>1,3-6 |
| Y<br>A | JP 2004-251660 A (Mitsubishi Electric Corp.),<br>09 September 2004 (09.09.2004),<br>paragraphs [0090] to [0095]<br>(Family: none) | 2<br>1,3-6 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 May, 2010 (25.05.10) | 08 June, 2010 (08.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/054840 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | CD-ROM of the specification and drawings annexed to the request of Japanese Utility Model Application No. 32861/1992 (Laid-open No. 14966/1993)<br>(Tokimec Inc.),<br>26 February 1993 (26.02.1993),<br>paragraphs [0002] to [0004]<br>(Family: none) | 3<br>1,2,4-6 |
| A | JP 2007-147554 A  (Denso IT Laboratory, Inc.),<br>14 June 2007 (14.06.2007),<br>paragraphs [0023] to [0026]<br>& US 2007/0120730 A1 | 1-6 |
| A | JP 2003-248057 A  (Japan Radio Co., Ltd.),<br>05 September 2003 (05.09.2003),<br>entire text; all drawings<br>(Family: none) | 1-6 |
| A | JP 2003-204546 A  (Fuji Heavy Industries Ltd.),<br>18 July 2003 (18.07.2003),<br>entire text; all drawings<br>(Family: none) | 1-6 |
| A | JP 6-266828 A  (Fuji Heavy Industries Ltd.),<br>22 September 1994 (22.09.1994),<br>entire text; all drawings<br>(Family: none) | 1-6 |
| A | JP 7-239382 A  (TRW Inc.),<br>12 September 1995 (12.09.1995),<br>entire text; all drawings<br>& EP 535780 A1            & US 5315303 A | 1-6 |
| A | JP 2007-278772 A  (Toshiba Corp.),<br>25 October 2007 (25.10.2007),<br>entire text; all drawings<br>(Family: none) | 1-6 |

Form PCT/ISA/210 (continuation of second sheet) (July 2009)

## INTERNATIONAL SEARCH REPORT

| International application No. |
| --- |
| PCT/JP2010/054840 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
```
    The invention in claim 1 cannot be considered to be novel in the light of
the invention described in JP 2009-92410 A (Fujitsu Ten Ltd.), 30 April 2009
(30.04.2009), paragraphs [0088] - [0095], and does not have a special technical
feature.

                                                    (continued to extra sheet)
```

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

| International application No. |
| --- |
| PCT/JP2010/054840 |

<u>Continuation of Box No.III of continuation of first sheet(2)</u>

As a result of judging special technical features with respect to claims dependent on claim 1, it is considered that three inventions ([Invention 1] the invention in claims 1, 2, 4; [Invention 2] the invention in claim 3; and [Invention 3] the invention in claims 5, 6) linked by respective special technical features are involved. In the meantime, the invention in claim 1 having no special technical feature is classified into invention 1.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Radar Technology, revised version. **Takashi Yoshida.** Institute of Electronics, Information and Communication Engineers. 1996, 274, 275
- **Tamura.** Computer Image Processing. Qhmsha, 2004, 204-206
- Radar Technology, revised version. **Takashi Yoshida.** Institute of Electronics, Information and Communication Engineers. 1996, 264-267